# EUROPEAN PATENT SPECIFICATION

(11) **EP 2 060 213 B1**
(45) Date of publication and mention of the grant of the patent: **22.05.2013**
(21) Application number: 08018937.6
(22) Date of filing: 30.10.2008
(51) Int. Cl.: A47J 37/04

(54) **Method for controlling and regulating the cooking of foodstuff on the spit**
Verfahren zur Steuerung und Einstellung des Kochens von Lebensmitteln auf einem Spieß
Procédé de contrôle et de régulation de la cuisson d'un aliment à la broche

(30) Priority: 13.11.2007 IT TO20070810
(43) Date of publication of application: 20.05.2009
(73) Proprietor: Lo Spiedo di Matteo Breda, 24040 Lallio (BG) (IT)
(72) Inventor: Breda, Matteo, 24040 Lallio (BG) (IT)
(74) Representative: Garavelli, Paolo

(56) References cited:
- DE-A1- 10 062 371
- GB-A- 2 178 947
- US-B1- 6 539 842
- US-B1- 6 546 846

## Description

The present invention refers to a method for controlling and regulating the main parameters for cooking foodstuff on the spit. In particular, a method is described for regulating temperature and/or humidity when cooking on the spit a big piece of meat or fish.

The prior art can be deemed as: "Bakers' ovens characterised by the means for regulating the temperature" (IPC: A21B 1/40).

Ovens for cooking foodstuff comprise a cooking chamber equipped with radiating sources of necessary heat to heat the foodstuff. Heat emitted by radiating elements heats the foodstuff by direct irradiation and by convection due to the overheating of surrounding air contained in the hollow space formed between foodstuff and walls of the oven cooking chamber.

Heating by convection plays a major role in reaching a uniform cooking of the foodstuff volume. In fact, air ventilation systems are known, that are adapted to create a flow of overheated air that surrounds the foodstuff, this latter one placed in a fixed position and possibly supported by a tray placed inside the cooking chamber. Ventilation systems are mainly used in cooking bread-type products, these latter ones being characterised by different pieces with small sizes placed on a single tray or on different, vertically stacked trays. By changing the venting power, it is possible to regulate the amount of overheated air flow that strikes the foodstuff surface, thereby making the temperature reached by all foodstuffs contained in the cooking chamber uniform.

An efficient system, in order to obtain a uniform cooking, and alternative with respect to the above-described system with forced ventilation, takes into account the foodstuff to be cooked applied to a rotary spit with respect to a spit with fixed, mainly horizontal axis, without anyway excluding the vertical axis, used when cooking kebab.

Cooking with a rotary spit ensures a uniform radial distribution, with respect to the rotation axis, of physical quantities like temperature and humidity. This latter one, if foodstuff is meat, becomes the expression of the flow of fat which falls downwards, being collected on the oven bottom; in this case, the spit rotation ensures a radial flow of fat towards the periphery of the piece of meat, contributing, together with temperature, to make cooking uniform. In fact, it must be stated that a fixed spit creates a vertical flow of fat downwards, which does not favour the cooking uniformity of the piece of meat, above all if its sizes are big.

A problem that occurs when cooking foodstuff on the spit, in this case a big-sized piece of meat, is the need of controlling temperature when cooking.

A result that in this sense is deemed ideal is given by an oven with spit containing a big piece of meat rotating by means of a horizontal or vertical spit, the law of movement of the spit being such as to:
- stabilise the spit in a certain angular position when a temperature increase is recorded in the portion of coldest meat volume;
- start rotating again when a temperature stabilisation is recorded in the portion of coldest meat volume;
   or:

- stabilise the spit in a certain angular position when a humidity drop is recorded, namely a flow of fat, in the portion of most humid meat volume;
- start again rotating when a stabilisation of the humidity drop is recorded.

The main object of the present invention is providing an automatic method for optimising the cooking of foodstuff on the spit, based on the automatic control of significant cooking parameters.

This object is reached by a method according to independent claim 1 using a system as disclosed, for example, in DE-A1-10062371 or US-B1-6539842.

In particular, the system is equipped with:
- a rotary spit connected to a dragging motor with adjustable speed;
- sensors for measuring the characteristic physical quantities: for example temperature and humidity;
- a processor for controlling the motor movement according to well-defined laws of movement;
- a position sensor of the spit rotary shaft.

The invention will be described in detail with reference to the enclosed drawings, in which:

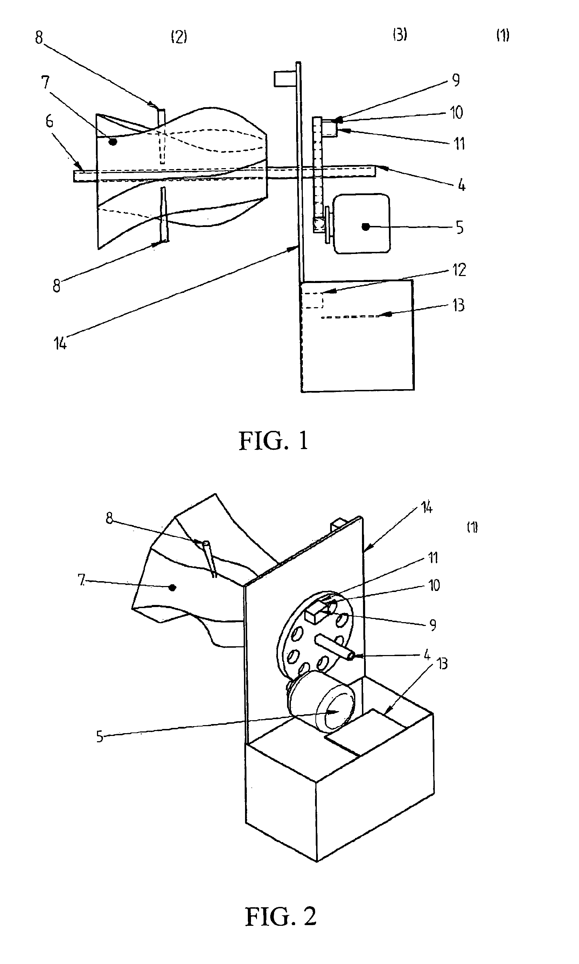

- figure 1 is a front view of some parts of an oven with spit to which the method for regulating relevant physical quantities is applied;
- figure 2 is an axonometric view of the parts of figure 1;

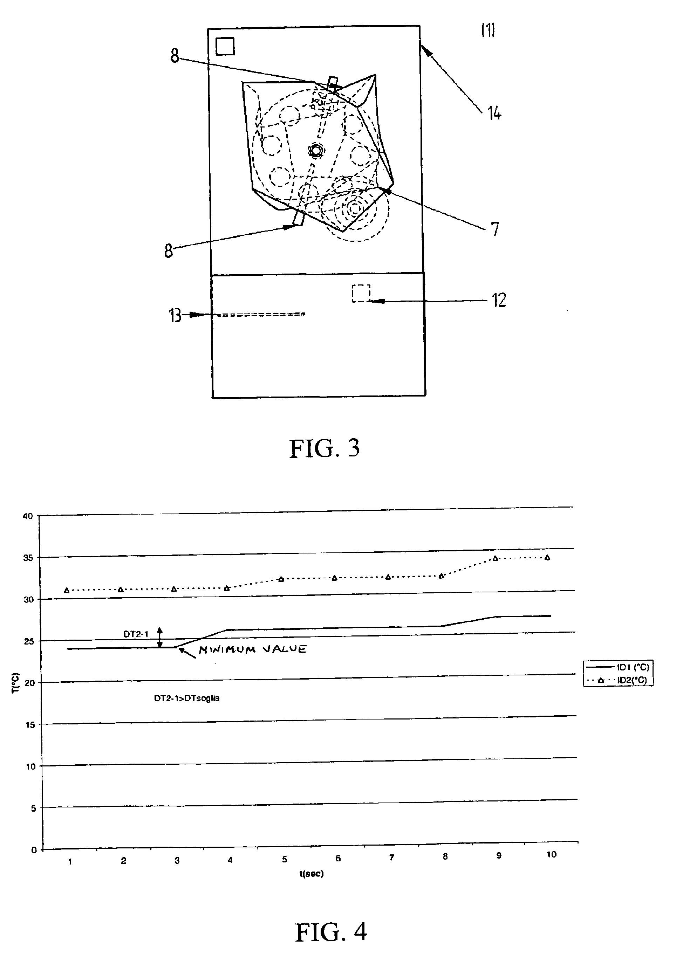

- figure 3 is a side view of the parts of figure 1; and
- figure 4 is a graph for determining the stop point of the spit dragging motor.

An apparatus for cooking on the spit 1 comprises a cooking space 2, open or delimited by external, heat-insulated or glass walls (not shown) and a motoring chamber 3, delimited by external heat-insulated walls (not shown). The two cooking 2 and motoring 3 chambers are separated by a heat-insulated wall 14, which thermally insulates the electric parts (motor, electric panel, command console, encoder, moving transmitter and fixed receiver) and the mechanical parts (transmission with toothed grooves or belt) placed in the motoring chamber 3. A motor 5 is placed in the motoring chamber 3.

A piece of meat 7 to be subjected to cooking contains inside its own volume at least two thermal probes 8, arranged as mutually offset by half of a round angle and at a depth next to the rotation axis 6 of the spit 4. The spit 4 is rotated through a known mechanical transmission connected to the motor 5.

Each probe 8 inserted inside the volume of meat 7 is connected through a cable to a data converting and transmitting card 10 integral to the rotation axis 4-6. Said data converting and transmitting card 10 is electrically supplied by a re-chargeable battery 11 or through a sliding contact comprising a brush and band (not shown).

A receiver 12, also operating as analogue converter of measured data, is integral with the control card 13 applied in the electric panel; said receiver 12 receives the radio signal emitted by the data converting and transmitting system 10 integral with the rotary axis 6 of the spit 4.

The method for controlling the cooking of the piece of meat 7 on the spit consists in performing the following steps:
- detecting the probe temperatures ID1, ID2 ... IDn, where n is the number of probes inserted into the piece of meat, when rotating the spit 4; namely: measuring T(IDi, t1), T(IDi, t2), ... T(IDi, tn) wherein t1, t2 ... tn are the instants of time when measuring the temperature when the spit rotates;
- through a processor connected to the control card 13, the probe ID is selected whose absolute temperature value detected above is the minimum among all available probes; namely: MINIMUM VALUE [T(IDi, t1), T(IDi, t2), ... T(IDi, tn)];
- by then operating on the probe ID with minimum temperature value, the temperature gradient with respect to the previous value is recorded ; namely: DT2-1 = T(IDi, t2) - T(IDi, t1);
- through a processor, the following logic IF operation is performed: If DT2-1 < DTsoglia, where DTsoglia is a fixed value of temperature variation, then the motor 5 goes on dragging the spit 4 in rotation;
- if: DT2-1 > DTsoglia, then the motor 5 stops, allowing to heat the portion of piece of meat in which the temperature is minimum and the thermal gradient DT is maximum.

It is possible to set a certain interval of time in which the motor remains stopped in the position in which the DT is maximum. Over this time, the motor starts again dragging the spit restarting the temperature data acquisition procedure.

The same cycle is valid if the probes are of the hygroscopic type for measuring humidity.

Each probe 8 falls within a detecting assembly substantially composed of three main members:
- probe for measuring a quantity of significance 8;
- system for converting and transmitting 9-10-11 the detected value;
- receiver and re-converter 12 the detected values in analogue form.

From the constructive point of view, the system for controlling the physical quantities for cooking on the spit is based on the use of probes 8 physically connected to the transmitter 9-10-11 in the moving part of the spit 4-6. In this way, it is possible to detect the quantity of significance (temperature, humidity) when cooking and above all when rotating.

The operating principle is as follows:
- each probe (thermocouple, hygrometer) 8 detects the significant quantity (temperature, humidity) in the foodstuff 7 core or at another height with respect to the rotation axis 6;
- the measured value is converted from an analogue value to a digital format by the transmitter assembly 9-10-11 on the moving part of the spit 4-6;
- after the conversion, purpose of the transmitting system is encapsulating data in a string, in order to then transmit them. Such data must be identified with a probe Identification Number ID and a transmitter Identification Number ID;
- the receiver 12 performs the function of receiving and dispatching the various data depending on the probe identification number ID, obviously taking into account only data related to the transmitter identification number;
- as output from the receiver 12, there are a number of analogue outputs equal to the number of probes of the transmitter 9-10-11. Outputs can be expressed as:

- a digital format that can be transmitted through a serial or wireless port;
- an analogue 4/20 mA or 0/10 V format;
- a PWM format that can be transmitted through a square wave managing-regulating the ON/OFF ratio.

The transmitting system 12 can be supplied by a re-chargeable battery 11 or by a connection with brushes and band, both installed on the rotary shaft 6 of the spit 4 (not shown).

For a problem dealing with operating temperatures, the transmitter system 9-10-11 is assembled in the engine compartment 3. The probe wires pass inside the rotary shaft of the spit 4-6. A preferred embodiment of the spit 4-6 provides for a certain number of longitudinal bars (not shown), arranged in order to close or cage the piece of meat without needing to insert therein a spit with central bar.

The receiver 12 can be installed inside the airtight electric panel 13 without needing to provide external connections. A possible encoder (not shown), integral with the spit, allows measuring the spit rotary angle. A possible thermal probe integral with the spit and thereby rotating therewith, acquires the thermal map of the external temperature of the cooking environment, correlating the measured value with the angular position detected by the encoder.

## Claims

1. Method for controlling a cooking of a piece of meat (7) on a spit, using a system for controlling and regulating a cooking on a spit (4-6) of foodstuff (7), of a type comprising thermal and/or hygrometric probes (8) connected to a data converting and transmitting system (9-10-11), and of a type comprising receiver and re-converter (12), said probes (8) being integral with the spit (4-6) and inserted inside the foodstuff (7), being adapted to detect a value of a thermal or hygrometric quantity inside the foodstuff (7), said method comprising the following steps:
- detecting the probe temperatures ID1, ID2 ... IDn, where n is the number of probes inserted in the piece of meat, when rotating the spit (4) in instants of time t1, t2 ... tn;
- through a processor connected to a control card (13), selecting the probe ID whose absolute temperature value as detected above is minimum among all available probes, namely: MINIMUM VALUE [T(IDi, t1), T(IDi, t2), ... T(IDi, tn)];
- by then operating on the probe ID with minimum temperature value, recording the temperature gradient with respect to the previous value, namely: DT2-1 = T(IDi, t2) - T(IDi, t1);
- through a processor, performing the following logic IF operation: If DT2-1 < DTsoglia, where DTsoglia is a fixed value of temperature variation, then the motor (5) goes on dragging the spit (4) to rotate;
- if: DT2-1 > DTsoglia, then the motor (5) stops, allowing to heat the portion of piece of meat in which the temperature is minimum and the thermal gradient DT is maximum.

2. Method according to claim 1, **characterised in that** said transmitter (9-10-11) is physically connected to the probe (8), being integral with the spit (4-6).

3. Method according to claim 1, **characterised in that** said transmitter (9-10-11) is physically connected both to the probe (8) and to the receiver and re-converter (12), said transmitter (9-10-11) and said receiver and re-converter (12) being both integral with the spit (4-6).

4. Method according to claim 1, **characterised in that** the electric components integral with the spit (4-6) are connected to the electric components installed in the electric panel by means of sliding contacts.

5. Method according to claim 1, **characterised in that** the electric components integral with the spit (4-6) are connected to the electric components installed in the electric panel by means of radio waves.

6. Method according to claim 1, **characterised in that** the the transmitter assembly (9-10-11) converts into a digital format the value of the quantity measured by the probe (8).

7. Method according to claim 6, **characterised in that** the receiver and re-converter (12) receives and dispatches data depending on a probe identification number ID, taking into account only data related to a transmitter identification number ID.

8. Method according to claim 1, **characterised in that** the transmitter assembly (9-10-11) is supplied by a re-chargeable battery (11).

9. Method according to any one of the previous claims, **characterised in that** the spit (4-6) is composed of a cage of longitudinal bars adapted to contain a piece of foodstuff to be cooked.

10. Method according to any one of the previous claims, **characterised in that** the receiver (12) is installed inside the airtight electric panel (13) without needing external connections.

11. Method according to any one of the previous claims, **characterised in that** it comprises: an encoder for measuring the angular spit position; and a thermal probe integral with the spit capable of detecting the air temperature.

## Patentansprüche

1. Kontrollmethode für das Grillen von einem Stück Fleisch (7) am Spieß, durch die Anwendung eines Kontroll- und Einstellungssystem für das Grillen am Spieß (4-6) von Nahrungsmitteln (7), ein Typ schließt Temperatur- und/oder Feuchtigkeitssonden (8) ein, die mit einem Datenumsetzungs- und - übertragungssystem (9-10-11) verbunden sind, und ein Typ schließt einen Empfänger und einen Umsetzer (12) ein, die genannten Sonden (8) sind fest mit dem Spieß (4-6) verbunden, werden in das Nahrungsmittel (7) gesteckt und dienen dazu, den Wärmegrößenwert oder den Feuchtigkeitswert im Nahrungsmittel (7) zu erfassen, die genannte Methode schließt folgende Phasen ein:
- Temperaturerfassung der Sonde ID1, ID2....und IDn, wo n die Anzahl der in das Stück Fleisch eingesetzten Sonden während der Spießdrehung (4) in den Zeitpunkten t1, t2 ... tn ist;
- Mit einem Prozessor, der mit einer Steuerkarte (13) verbunden ist, Auswahl der ID Sonde, deren oben erfasster absoluter Temperaturwert der kleinste unter den verfügbaren Sonden ist, d. h.: MINDESTWERT [T(IDi, t1) T(IDi, t2), .....T(IDi, tn)];
- Durch Einwirken auf die ID Sonde mit dem Temperaturmindestwert, Registrierung des Temperaturgradienten hinsichtlich des vorhergehenden Wertes, d. h.: DT2-1 = T(IDi, t2) - T(IDi, t1);
- Mit einem Prozessor Ausführung des folgenden Vorgangs des logischen IF: Wenn DT2-1 < DTGrenzwert, wo DTGrenzwert ein fixierter Wert der Temperaturschwankung ist, nimmt der Motor (5) den Spieß (4) weiterhin in die Drehung mit;
- Falls: DT2-1 > DTGrenzwert, hält der Motor (5) an und ermöglicht die Erhitzung des Fleischstückanteils, in dem die Temperatur minimal und der Temperaturgradient DT maximal ist.

2. Methode gemäß Patentanspruch 1, die **dadurch gekennzeichnet ist, dass** der genannte Sender (9-10-11) physisch mit der Sonde (8) und fest mit dem Spieß (4-6) verbunden ist.

3. Methode gemäß Patentanspruch 1, die **dadurch gekennzeichnet ist, dass** der genannte Sender (9-10-11) physisch sowohl mit der Sonde (8) als auch mit dem Empfänger und Umsetzer (12) verbunden ist, der genannte Sender (9-10-11) und der genannte Empfänger und Umsetzer (12) sind beide fest mit dem Spieß (4-6) verbunden.

4. Methode gemäß Patentanspruch 1, die **dadurch gekennzeichnet ist, dass** die elektrischen Bestandteile, die fest am Spieß (4-6) befestigt sind, mit den elektrischen Bestandteilen verbunden sind, die im Schaltschrank durch die Schleifkontakte installiert werden.

5. Methode gemäß Patentanspruch 1, die **dadurch gekennzeichnet ist, dass** die elektrischen Bestandteile, die fest am Spieß (4-6) befestigt sind, mit den elektrischen Bestandteilen verbunden sind, die im Schaltschrank durch Funkwellen installiert werden.

6. Methode gemäß Patentanspruch 1, die **dadurch gekennzeichnet ist, dass** die Sendergruppe (9-10-11) den von der Sonde (8) gemessenen Größenwert in ein digitales Format umsetzt.

7. Methode gemäß Patentanspruch 6, die **dadurch gekennzeichnet ist, dass** der Empfänger und Umsetzer (12) die Daten aufgrund einer Identifikationsnummer ID der Sonde empfängt und verteilt, wobei nur die Daten berücksichtigt werden, die mit der Identifikationsnummer ID des Senders verbunden sind.

8. Methode gemäß Patentanspruch 1, die **dadurch gekennzeichnet ist, dass** die Sendergruppe (9-10-11) durch eine aufladbare Batterie (11) gespeist wird.

9. Methode gemäß einem der vorhergehenden Patentansprüche, die **dadurch gekennzeichnet ist, dass** der Spieß (4-6) durch einen Längsstangenkäfig gebildet wird, der dazu dient, das zu grillende Nahrungsmittel zu enthalten.

10. Methode gemäß einem der vorhergehenden Patentansprüche, die **dadurch gekennzeichnet ist, dass** der Empfänger (12) im Schaltschrank (13) dicht installiert ist, ohne dass externe Verbindungen erforderlich sind.

11. Methode gemäß einem der vorhergehenden Patentansprüche, die **dadurch gekennzeichnet ist, dass** sie folgendes einschließt: einen Encoder für die Messung der Winkelposition des Spießes; und eine feste Temperatursonde am Spieß, die die Lufttemperatur erfassen kann.

## Revendications

1. Méthode de contrôle de la cuisson à la broche d'une pièce de viande (7), utilisant un système de contrôle et de réglage de la cuisson à la broche (4-6) d'aliments (7), d'un type comprenant des sondes thermiques et/ou hygrométriques (8) raccordées à un système de conversion et de transmission de données (9-10-11), et d'un type comprenant récepteur et re-convertisseur (12), lesdites sondes (8) étant solidaires à la broche (4-6) et insérées à l'intérieur de l'aliment (7), et étant apte à relever la valeur de la grandeur thermique ou hygrométrique à l'intérieur de l'aliment (7), ladite méthode comprenant les phases suivantes :
- Relevé de la température de la sonde ID1, ID2....et IDn, où n est le nombre des sondes insérées dans la pièce de viande, pendant la rotation de la broche (4) dans les instants de temps t1, t2 ... tn;
- Au moyen d'un processeur lié à une fiche de contrôle (13), sélection de l'ID sonde dont la valeur absolue de température relevée ci-dessus est minimum parmi toutes les sondes disponibles, c'est-à-dire : VALEUR MINIMUM [T(IDi, t1), T(IDi, t2), .....T(IDi, tn)];
- en agissant par conséquent sur l'ID sonde avec valeur minimum de la température, réglage du gradient de température par rapport à la valeur précédente, c' est-à-dire : DT2-1 = T(IDi, t2) - T(IDi, t1);
- au moyen d'un processeur, effectuation de l'opération suivante de IF logique: Si DT2-1 < DTseuil, où DTseuil est une valeur fixée de variation de température, alors le moteur (5) continue à entrainer en rotation la broche (4);
- si : DT2-1 > DTseuil, alors le moteur (5) s'arrête en permettant le chauffage de la portion de pièce de viande dans laquelle la température est minimum et le gradient thermique DT est maximum.

2. Méthode selon la revendication 1, **caractérisée par le fait que** ledit transmetteur (9-10-11) est physiquement lié à la sonde (8), en étant solidaire à la broche (4-6).

3. Méthode selon la revendication 1, **caractérisée par le fait que** ledit transmetteur (9-10-11) est physiquement lié soit à la sonde (8) soit au récepteur et re-convertisseur (12), ledit transmetteur (9-10-11) et ledit récepteur et re-convertisseur (12) étant tous les deux solidaires à la broche (4-6).

4. Méthode selon la revendication 1, **caractérisée par le fait que** les composants électriques solidaires à la broche (4-6) son raccordés aux composants électriques installés dans le tableau électrique au moyen de contacts frotteurs.

5. Méthode selon la revendication 1, **caractérisée par le fait que** les composants électriques solidaires à la broche (4-6) sont raccordés aux composants électriques installés dans le tableau électrique au moyen d'ondes radio.

6. Méthode selon la revendication 1, **caractérisée par le fait que** l'ensemble transmetteur (9-10-11) convertit en un format digital la valeur de la grandeur mesurée par la sonde (8).

7. Méthode selon la revendication 6, **caractérisée par le fait que** le receveur et re-convertisseur (12) reçoit et distribue les données en fonction du numéro d'identification ID sonde, en prenant en compte uniquement les données corrélés au numéro d'identification ID transmetteur.

8. Méthode selon la revendication 1, **caractérisée par le fait que** l'ensemble transmetteur (9-10-11) est alimenté par une batterie rechargeable (11).

9. Méthode selon une des revendications précédentes, **caractérisée par le fait que** la broche (4-6) est formée d'une cage de barres longitudinales apte à contenir la pièce d'aliment à cuire.

10. Méthode selon une des revendications précédentes, **caractérisée par le fait que** le récepteur (12) est installé à l'intérieur du tableau électrique (13) à tenue étanche sans besoin de connexions à l'extérieur.

11. Méthode selon une des revendications précédentes, **caractérisée par** le fait de comprendre : un encoder pour la mesure de la position angulaire de la broche; et une sonde thermique solidaire à la broche capable de relever la température de l'air.
